(19) Europäisches Patentamt
European Patent Office
Office européen des brevets

(11) **EP 4 242 918 A1**

(12) **EUROPEAN PATENT APPLICATION**
published in accordance with Art. 153(4) EPC

(43) Date of publication:
**13.09.2023 Bulletin 2023/37**

(21) Application number: **21899937.3**

(22) Date of filing: **26.11.2021**

(51) International Patent Classification (IPC):
**G06N 3/04** (2023.01)

(86) International application number:
**PCT/CN2021/133500**

(87) International publication number:
**WO 2022/116905 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.12.2020 CN 202011391497**

(71) Applicant: **Huawei Technologies Co., Ltd.
Shenzhen, Guangdong 518129 (CN)**

(72) Inventors:
• **GUO, Huifeng
Shenzhen, Guangdong 518129 (CN)**

• **CHEN, Bo
Shenzhen, Guangdong 518129 (CN)**
• **TANG, Ruiming
Shenzhen, Guangdong 518129 (CN)**
• **LI, Zhenguo
Shenzhen, Guangdong 518129 (CN)**
• **HE, Xiuqiang
Shenzhen, Guangdong 518129 (CN)**

(74) Representative: **Goddar, Heinz J. et al
Boehmert & Boehmert
Anwaltspartnerschaft mbB
Pettenkoferstrasse 22
80336 München (DE)**

(54) **DATA PROCESSING METHOD AND APPARATUS**

(57) Embodiments of this application provide a data processing method and apparatus to better learn a vector representation value of each feature value in a continuous feature. The method specifically includes: The data processing apparatus obtains the continuous feature from sample data, and then performs discretization processing on the continuous feature by using a discretization model, to obtain N discretization probabilities corresponding to the continuous feature. The N discretization probabilities correspond to N preset meta-embeddings, and N is an integer greater than 1. Finally, the data processing apparatus determines a vector representation value of the continuous feature based on the N discretization probabilities and the N meta-embeddings.

FIG. 7

## Description

This application claims priority to Chinese Patent Application No. 202011391497.6, filed with the China National Intellectual Property Administration on December 2, 2020 and entitled "DATA PROCESSING METHOD AND APPARATUS", which is incorporated herein by reference in its entirety.

## TECHNICAL FIELD

This application relates to the field of artificial intelligence, and in particular, to a data processing method and apparatus.

## BACKGROUND

Artificial intelligence (Artificial Intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

Currently, various AI functions, such as natural language processing, image processing, and speech processing, are usually implemented by using a neural network. With development of AI technologies, AI functions are gradually diversified. However, these functions are implemented based on input data and labels. Parameters of a machine learning model are trained by using optimization methods such as a gradient descent method. After the parameters of the model converge, the model can be used to predict unknown data. Therefore, processing of the input data and labels can be considered as a basis of AI. Based on data type differences, data to be input can be classified into a continuous feature and a discrete feature. Currently, for the discrete feature, one-hot encoding (one-hot encoding) is usually used. For the continuous feature, three common feature processing methods: a categorization method, a normalization method, and a discretization method are used. The discretization method is widely used in the industry, and includes an equal-frequency discretization method, an isometric discretization method, a logarithm method, a tree-based method, and the like.

An existing continuous feature processing method is to: discretize continuous feature values into different ranges (such as buckets, buckets) according to a discretization policy (such as a heuristic rule or model), replace original feature values with numbers of the ranges, and then obtain a vectorized representation in a manner same as that of the discrete feature. However, in this method, a large amount of manpower and time are usually required to try and optimize the discretization policy, so as to obtain an optimal discretization rule or model, and further obtain a final embedding vector representation. In addition, all discretization policies have the following disadvantages: a two-phase problem (two-phase problem, TPP), a similar value but different dissimilar embeddings (similar value but dissimilar embedding, SBD), and dissimilar values but a same embedding (dissimilar value but same embedding, DBS). For example, age features are divided into several groups including a group of ages of 18 to 40 and another group of ages of 40 to 60. A same embedding is used for ages of 18 and 40 with a large age difference, and cannot reflect the difference between the two ages. However, ages of 40 and 41 that are close to each other are divided into two groups, and embeddings may be significantly different. Therefore, vector representation values of the continuous feature in the existing solution are insufficient.

## SUMMARY

Embodiments of this application provide a data processing method and apparatus to better learn a vector representation value of each feature value in a continuous feature, so that the vector representation value has a better representation capability.

According to a first aspect, an embodiment of this application provides a data processing method. The method specifically includes: A data processing apparatus obtains a continuous feature from sample data, and then performs discretization processing on the continuous feature by using a discretization model, to obtain N discretization probabilities corresponding to the continuous feature. The N discretization probabilities correspond to N preset meta-embeddings, and N is an integer greater than 1. Finally, the data processing apparatus determines a vector representation value of the continuous feature based on the N discretization probabilities and the N meta-embeddings.

In this embodiment, the continuous feature is feature data having a continuous statistical characteristic value in the sample data. In an example solution, the continuous feature includes, but is not limited to an age feature, a click count feature, and a score feature in a recommendation model. A value of the click count feature may be a value range of an entire positive integer, and the value is a continuous feature, for example, the value is 1, 2, 3, 4, .... A value of the age feature may be 0 to an existing recorded maximum age. Discrete features in the sample data may be usually listed one by one only in a specific sequence. For example, a value of a gender feature is only male or female.

Vector representation means that a specific feature is represented by a vector. In this embodiment, the meta-embedding may be a preset initialized vector representation value, or may be an optimized vector representation value. The vector representation value of the continuous feature is a vector value that is determined based on the meta-embedding and that is used to represent a specific feature of the continuous feature. It may be understood that a dimension of the vector representation value of the continuous feature is the same as that of the meta-embedding. In an example solution, the meta-embedding may be a five-dimensional vector value, for example, (01010). The vector representation value corresponding to the continuous feature is also a five-dimensional vector value, for example, (11010).

In this embodiment, the data processing apparatus calculates a discretization probability, that has more than one dimension, for a feature value of each continuous feature by using the discretization model, presets a meta-embedding, that has more than one dimension, for each continuous feature field in the continuous feature, and determines, for a feature value, a vector representation value from the meta-embedding by using an aggregate function and the discretization probability. In this way, compared with the conventional technology, in this embodiment, the vector representation value obtained through learning has a better representation capability, thereby helping improve accuracy of a prediction result.

Optionally, a specific manner in which the data processing apparatus performs discretization processing on the continuous feature by using a discretization model, to obtain N discretization probabilities corresponding to the continuous feature may be as follows: The data processing apparatus presets an initial variable in the discretization model, then determines, based on the initial variable, N mapping values corresponding to the continuous feature, and finally calculates the N discretization probabilities of the continuous feature based on the mapping value. In this embodiment, the initial variable may be an initial mapping field. For the continuous feature, the N mapping values corresponding to the continuous feature may be calculated based on the initial variable. Then, one corresponding probability is calculated based on each of the N mapping values, to obtain N probabilities. In this case, the N probabilities are used as the N discretization probabilities corresponding to the continuous feature.

Optionally, the discretization model may be a multiclass neural network, an attention network, or linear mapping and softmax. In this embodiment, the discretization model only needs to implement that the feature value corresponds to a plurality of discretization probabilities. The discretization model is not specifically limited herein. In addition, the discretization model may also be correspondingly selected based on different application scenarios. For example, in a system in which classification processing can be performed on continuous features, the discretization model may be the discretization model provided above.

Optionally, based on the foregoing manner, when the discretization model is linear mapping and softmax, the obtaining N discretization probabilities of the continuous feature by using a discretization model may be specifically:

presetting an initialized linear mapping variable to $W_{logit} = R^{1 \times h}$, where the initialized linear mapping variable is the initial variable; determining, according to a linear mapping formula, the N mapping values corresponding to the continuous feature, where
the linear mapping formula is $cont_{logit} = cont \cdot W_{logit}$; and calculating, according to a discretization formula, a probability corresponding to each of the N mapping values to obtain N probabilities, where the discretization formula is

$$cont\_p_k = e^{\frac{1}{\tau} cont_{logit}^k} / \sum_{i=1}^{h} e^{\frac{1}{\tau} cont_{logit}^i}$$

, and the N probabilities are used as the N discretization probabilities.

$W_{logit}$ indicates a linear mapping variable, $R$ indicates a real number field, $h$ indicates a quantity of buckets into which the continuous feature is discretized, $h$ is equal to N, $cont_{logit}$ indicates a representation obtained after linear mapping of the continuous feature, $cont\_p_k$ indicates a probability that the continuous feature is discretized to a $k^{th}$ bucket, $cont_{logit}^k$ indicates a $k^{th}$ neuron output after linear mapping of the continuous feature, $\tau$ indicates a temperature

control coefficient of softmax, and $cont^i_{logit}$ indicates an $i^{th}$ neuron output after linear mapping of the continuous feature.

Optionally, in this embodiment, the data processing apparatus may determine, by using an aggregate function and based on the N discretization probabilities and the N meta-embeddings, the vector representation value corresponding to the continuous feature. The aggregate function is Max-Pooling, Top-K-Sum, or Weighted-Average.

It may be understood that the aggregate function is used to aggregate N meta-embeddings corresponding to the N discretization probabilities into one embedding corresponding to the continuous feature. In an example solution, the discretization probabilities are (a1, a2, a3, a4), and the meta-embeddings are (b1, b2, b3, b4). In this case, a1 corresponds to b1, a2 corresponds to b2, a3 corresponds to b3, and a4 corresponds to b4. The aggregate function is used to aggregate (b1, b2, b3, b4) into one embedding, and the continuous feature is represented by the embedding. For example, (b1, b2, b3, b4) may be aggregated to obtain b3 as the vector representation value corresponding to the continuous feature.

Max-Pooling is calculated in a manner: obtaining, from the meta-embeddings based on an index corresponding to a largest value in the discretization probabilities, the corresponding embedding as the vector representation value corresponding to the continuous feature. A calculation formula of the vector representation value is $vx\_cont = E^k$, where $k = \arg\max_h \{cont\_p_h\}$. For example, it is assumed that the discretization probabilities are (a1, a2, a3, a4), and the meta-embeddings are (b1, b2, b3, b4). In this case, a1 corresponds to b1, a2 corresponds to b2, a3 corresponds to b3, and a4 corresponds to b4. If a value of a3 is largest, b3 is used as the vector representation value of the continuous feature.

Top-K-Sum is calculated in a manner: obtaining indexes corresponding to k largest values in the discretization probabilities, then obtaining corresponding embeddings from the meta-embeddings, and summing up the indexes as the vector representation value corresponding to the continuous feature. A calculation formula of the vector representation value is $$vx\_cont = \sum_{k=1}^{K} E^k$$ , where $k = \arg topk_h \{cont\_p_h\}$. For example, it is assumed that the discretization probabilities are (a1, a2, a3, a4), and the meta-embeddings are (b1, b2, b3, b4). In this case, a1 corresponds to b1, a2 corresponds to b2, a3 corresponds to b3, and a4 corresponds to b4. If values of a2 and a3 are largest, a sum of b2 and b3 is used as the vector representation value of the continuous feature.

Weighted-Average is calculated in a manner: performing weighted summation on the N probabilities and the meta-embeddings, and using a weighted sum of the N probabilities and the meta-embeddings as the vector representation value corresponding to the continuous feature. A calculation formula of the vector representation value is $$vx\_cont = \sum_{k=1}^{h} cont\_p_k \times E^k$$ . It may be understood that h in the calculation formula is equal to N. For example, it is assumed that the discretization probabilities are (a1, a2, a3, a4), and the meta-embeddings are (b1, b2, b3, b4). In this case, a1 corresponds to b1, a2 corresponds to b2, a3 corresponds to b3, and a4 corresponds to b4. The vector representation value of the continuous feature is equal to (a1×b1+a2×b2+a3×b3+a4×b4).

Optionally, the method further includes: inputting a user feature and an object feature into a recommendation model or a search model to obtain a prediction result. The user feature or the object feature includes the vector representation value. The user feature or the to-be-recommended object feature represents the continuous feature by using the vector representation value. To be specific, the data processing method provided in this embodiment of this application may be further applied to a specific application scenario. When the data processing method is applied to the recommendation model or the search model, the user feature and the object feature need to be input into the recommendation model or the search model. If the user feature or the object feature includes the continuous feature, the data processing model may output the vector representation value of the continuous feature by using the foregoing method, the vector representation value is included in the user feature or the object feature and input to the recommendation model or the search model.

Optionally, the vector representation value may be directly included in the user feature or the object feature, may be spliced with another continuous feature to be used as an entire input feature representation, or may be spliced with another continuous feature and another discrete feature to be used as an entire input feature representation. As long as the vector representation value can be used as an input of model application or model training, this is not specifically limited herein. In this way, because the continuous feature has a better vector representation value, the input feature representation also has a better representation capability. Therefore, in a model training and model application process, a function of the model can be implemented more accurately.

Optionally, in an application or training process of the foregoing model, the data processing apparatus may further obtain an actual result in the application process, and then adjust a weight parameter in the discretization model based on the prediction result and the actual result by using a loss function in the model training process. The weight parameter may be understood as another parameter that does not include N, for example, the meta-embedding. In this way, the discretization model and a machine learning model that uses the discretization model affect each other, so that the weight parameter in the discretization model is adjusted based on real-time data distribution, to optimize the discretization model.

Optionally, N is greater than or equal to 20 and less than or equal to 100. Within this range, the discretization model may have good application effect.

Optionally, the continuous feature may be a normalized continuous feature. In this way, discretization of the continuous feature can be implemented more quickly.

According to a second aspect, this application provides a data processing apparatus. The apparatus has a function of implementing behavior of the data processing apparatus in the first aspect. The function may be implemented by hardware, or may be implemented by hardware executing corresponding software. The hardware or the software includes one or more modules corresponding to the foregoing function.

In a possible implementation, the apparatus includes units or modules configured to perform the steps in the first aspect. For example, the apparatus includes: an obtaining module, configured to obtain a continuous feature; and a processing module, configured to: perform discretization processing on the continuous feature by using a discretization model, to obtain N discretization probabilities corresponding to the continuous feature, where N is an integer greater than 1, and the N discretization probabilities correspond to N preset meta-embeddings; and determine a vector representation value of the continuous feature based on the N discretization probabilities and the N meta-embeddings.

Optionally, the data processing apparatus further includes a storage module, configured to store program instructions and data that are necessary for the data processing apparatus.

In a possible implementation, the apparatus includes a processor and a transceiver. The processor is configured to support the data processing apparatus in performing a corresponding function in the method provided in the first aspect. The transceiver is configured to indicate communication between the data processing apparatus and a sample data storage apparatus, for example, obtain the continuous feature from the sample data storage apparatus. Optionally, the apparatus further includes a memory. The memory is configured to be coupled to the processor, and stores program instruction and data that are necessary for the data processing apparatus.

In a possible implementation, when the apparatus is a chip in the data processing apparatus, the chip includes a processing module and a transceiver module. The transceiver module may be, for example, an input/output interface, a pin, or a circuit on the chip, and transmits the continuous feature to another chip or module coupled to the chip. The processing module may be, for example, a processor. The processor is configured to: perform discretization processing on the continuous feature by using a discretization model, to obtain N discretization probabilities corresponding to the continuous feature, where N is an integer greater than 1, and the N discretization probabilities correspond to N preset meta-embeddings; and determine a vector representation value of the continuous feature based on the N discretization probabilities and the N meta-embeddings. The processing module may execute computer-executable instructions stored in a storage unit, to support the data processing apparatus in performing the method provided in the first aspect. Optionally, the storage unit may be a storage unit in the chip, for example, a register or a cache. Alternatively, the storage unit may be a storage unit outside the chip, for example, a read-only memory (read-only memory, ROM), another type of static storage device capable of storing static information and instructions, or a random access memory (random access memory, RAM).

In a possible implementation, the apparatus includes a communication interface and a logic circuit. The communication interface is configured to obtain a continuous feature. The logic circuit is configured to: perform discretization processing on the continuous feature by using a discretization model, to obtain N discretization probabilities corresponding to the continuous feature, where N is an integer greater than 1, and the N discretization probabilities correspond to N preset meta-embeddings; and determine a vector representation value of the continuous feature based on the N discretization probabilities and the N meta-embeddings.

The processor mentioned anywhere above may be a general-purpose central processing unit (Central Processing Unit, CPU), a microprocessor, an application-specific integrated circuit (application-specific integrated circuit, ASIC), or one or more integrated circuits configured to control program execution of the data transmission method in the foregoing aspects.

According to a third aspect, an embodiment of this application provides a computer-readable storage medium. The computer storage medium stores computer instructions, and the computer instructions are used to perform the method according to any one of the possible implementations of the foregoing aspects.

According to a fourth aspect, an embodiment of this application provides a computer program product including instructions. When the computer program product runs on a computer, the computer is enabled to perform the method in any one of the foregoing aspects.

According to a fifth aspect, this application provides a chip system. The chip system includes a processor, configured to support a data processing apparatus in implementing functions described in the foregoing aspects, for example, generating or processing data and/or information in the foregoing aspects. In a possible design, the chip system further includes a memory. The memory is configured to store program instructions and data that are necessary for the data processing apparatus, to implement functions in any one of the foregoing aspects. The chip system may include a chip, or may include a chip and another discrete component.

## BRIEF DESCRIPTION OF DRAWINGS

FIG. 1 is a schematic diagram of an artificial intelligence main framework;

FIG. 2 is a schematic diagram of a processing procedure of a recommendation system;

FIG. 3 is a schematic diagram of a structure of a recommendation system;

FIG. 4 is a diagram of an example model architecture for structures of a discretization model and a deep learning model according to an embodiment of this application;

FIG. 5 is a schematic diagram of an embodiment of a data processing apparatus according to an embodiment of this application;

FIG. 6 is a schematic diagram of another embodiment of a data processing apparatus according to an embodiment of this application;

FIG. 7 is a schematic diagram of an embodiment of a data processing method according to an embodiment of this application;

FIG. 8 is a schematic diagram of an application scenario of application recommendation display according to an embodiment of this application;

FIG. 9 is a schematic diagram of another embodiment of a data processing method according to an embodiment of this application; and

FIG. 10 is a schematic diagram of another embodiment of a data processing method according to an embodiment of this application.

## DESCRIPTION OF EMBODIMENTS

To make objectives, technical solutions, and advantages of this application clearer, the following describes embodiments of this application with reference to accompanying drawings. It is clear that the described embodiments are merely some rather than all of the embodiments of this application. A person of ordinary skill in the art may learn that, as a new application scenario emerges, the technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the data termed in such a way is interchangeable in proper circumstances so that embodiments described herein can be implemented in orders other than the order illustrated or described herein. Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved. Division into units in this application is logical division and may be other division in an actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, the units or subunits described as separate parts may or may not be physically separate, may or may not be physical units, or may be distributed on a plurality of circuit units. Some or all of the units may be selected based on an actual requirement to implement the objectives of the solutions of this application.

To better understand embodiments of the present invention, concepts that may be used in the following embodiments are first explained herein:

A machine learning system trains parameters of a machine learning model based on input data and labels by using optimization methods such as a gradient descent method, and finally predicts unknown data by using a model obtained through training.

A personalized recommendation system is a system that performs analysis and modeling based on historical data of a user and according to a machine learning algorithm, and predicts a new request by using a model obtained through modeling, to provide a personalized recommendation result.

Continuous feature: Features can be classified into continuous features and discrete features based on whether feature values are continuous. A feature that can have any value within a specific range is referred to as a continuous feature. Values of the continuous feature are continuous, and two adjacent values may be infinitely divided, that is, an infinite quantity of values may be obtained.

A discrete feature is a feature whose feature values can be listed one by one in a specific order, and the values are usually integers, such as, user gender, nationality, and object type. For some scenarios that are continuous features in nature, values are also integers, that is, these features can be considered as discrete features.

Feature field and feature value: The feature field is a set of feature values. For example, gender is a feature field. The feature value is a value in a feature field. For example, in a gender feature field, both male and female are corresponding feature values.

Continuous feature discretization: Discretization processing is a common data preprocessing method and is used to convert a continuous value attribute into a discrete value attribute.

Vector representation means that a specific feature is represented by a vector. In this embodiment, the meta-embedding may be a preset initialized vector representation value, or may be an optimized vector representation value. The vector representation value of the continuous feature is a vector value that is determined based on the meta-embedding and that is used to represent a specific feature of the continuous feature. It may be understood that a dimension of the vector representation value of the continuous feature is the same as that of the meta-embedding. In an example solution, the meta-embedding may be a five-dimensional vector value, for example, (01010). The vector representation value corresponding to the continuous feature is also a five-dimensional vector value, for example, (11010).

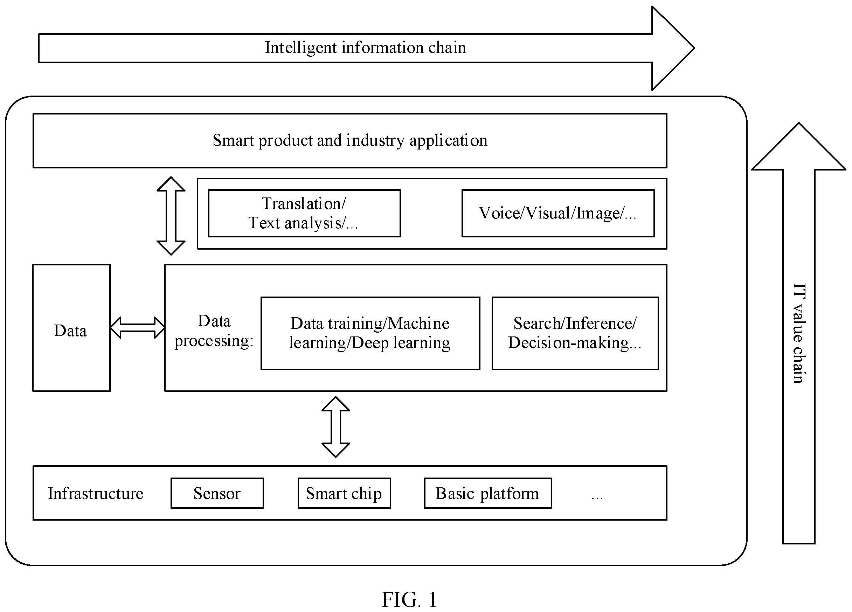

FIG. 1 is a schematic diagram of an artificial intelligence main framework. The main framework describes an overall working procedure of an artificial intelligence system, and is applicable to a requirement of a general artificial intelligence field.

The following describes the artificial intelligence main framework from two dimensions: an "intelligent information chain" (a horizontal axis) and an "IT value chain" (a vertical axis).

The "intelligent information chain" reflects a series of processes from obtaining data to processing the data. For example, it may be a general process of intelligent information perception, intelligent information representation and formation, intelligent inference, intelligent decision-making, and intelligent execution and output. In this process, the data undergoes a refinement process of "data-information-knowledge-intelligence".

The "IT value chain" reflects a value brought by artificial intelligence to the information technology industry from an underlying infrastructure and information (providing and processing technology implementation) of human intelligence to an industrial ecological process of a system.

(1) Infrastructure

The infrastructure provides computing capability support for an artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

The data at an upper layer of an infrastructure indicates a data source in the field of artificial intelligence. The data relates to a graph, an image, speech, and text, further relates to internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed based on formal information according to an inference control policy. A typical function is searching and matching.

Decision-making is a process in which a decision is made after intelligent information is inferred, and usually provides functions such as classification, ranking, and prediction.

(4) General capability

After data processing mentioned above is performed on data, some general capabilities may further be formed based on a data processing result, for example, an algorithm or a general system, such as translation, text analysis, computer vision processing, speech recognition, and image recognition.

(5) Smart product and industry application

The smart product and the industry application are a product and an application of an artificial intelligence system in various fields, and are package of an overall solution of artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

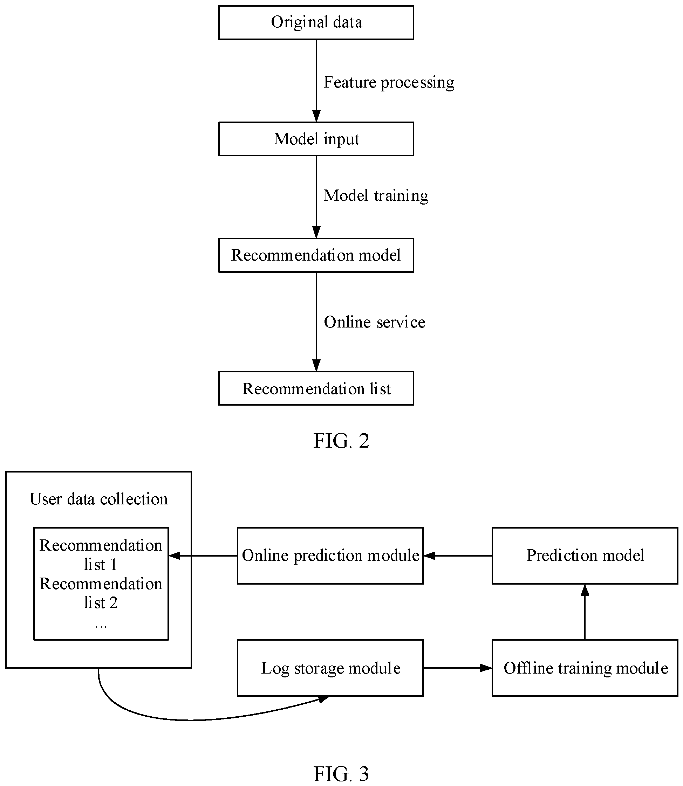

A continuous feature processing method provided in embodiments of this application is applied to application scenarios of various machine learning systems. In an example solution, the machine learning system may be a personalized recommendation system. In the personalized recommendation system, a specific processing procedure of the personalized recommendation system may be shown in FIG. 2. Raw data is first collected, and then feature processing is performed to obtain feature data that can be input to a model for training. The feature data is input to an initialized model, and a final recommendation model is obtained through model training. Finally, an online service module of the recommendation model generates a recommendation list for a user. A main structure of the recommendation system may be shown in FIG. 3. The structure includes user data collection, a log storage module, an offline training module, a prediction model, and an online prediction module. Basic running logic of the recommendation system as follows: The user performs a series of behaviors such as browsing, clicking, commenting, and downloading in a front-end display list to generate behavior data (that is, a front end collects user data), and then the behavior data is stored in the log storage module. The personalized recommendation system performs offline model training by using data including a user behavior log, generates the prediction model after training convergence, deploys the model in an online service environment, and provides a recommendation result based on an access requested by the user, an object feature, and context information. Then the user generates feedback to the recommendation result to form a new round of user data. In the flowchart shown in FIG. 2 or the diagram of the structure shown in FIG. 3, feature processing of the raw data or user data (that is, log data) is a basis of model training and an online service, and is important in the machine learning system.

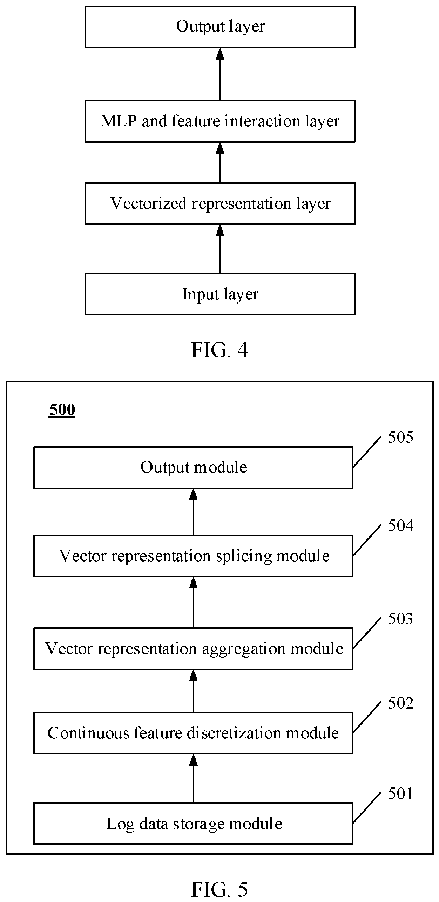

The following describes in detail a function and a relationship between feature processing and a machine learning model or a deep learning model with reference to a diagram of a model architecture. An example solution is shown in FIG. 4. Deep learning is used as an example of the diagram of the model architecture. The diagram of the model architecture includes an input layer, a vectorized representation layer (Embedding), a multi-layer neural network (Multi-layer Perceptron, MLP) and feature interaction layer, and an output layer. The input layer inputs a data feature, including a continuous feature and a discrete feature. The data feature is processed at the vectorized representation layer. Details are as follows: For the discrete feature, sparse coding is performed by using one-hot, then a corresponding embedding vector representation is extracted from an embedding table based on an ID of sparse coding, and finally embedding vector representations of all discrete features are sequentially spliced. For the continuous feature, vectorized representation is performed after discretization. After the vectorized representation of each feature is obtained, embeddings of all the continuous features and discrete features are spliced as input data of the neural network. The input data is processed by using the MLP and feature interaction layer and the output layer to obtain a predicted value. It can be learned that discrete processing of the continuous feature is not only used for representation modeling of the continuous feature, but also directly affects parameter learning of an upper-layer MLP and feature interaction layer. In addition, gradient backpropagation indirectly affects learning of parameters related to the discrete feature. This plays an important role in final model prediction effect.

As shown in FIG. 5, an embodiment of this application provides a data processing apparatus 500, including a log data storage module 501, a continuous feature discretization module 502, a vector representation aggregation module 503, a vector representation splicing module 504, and an output module 505. The log data storage module 501 is configured to collect and store behavior data fed back by a front-end user. The continuous feature discretization module 502 outputs N discretization probabilities for a continuous feature by using linear transformation and softmax, a multiclass neural network, or an attention network. The vector representation aggregation module 503 is configured to determine, based on the N discretization probabilities and N preset meta-embeddings, a vector representation value corresponding to the continuous feature. Finally, the vector representation splicing module 504 sequentially splices vector representation values of all features as input data of the machine learning or deep learning model. Finally, the output module 505 outputs the input data to the machine learning model or the deep learning model.

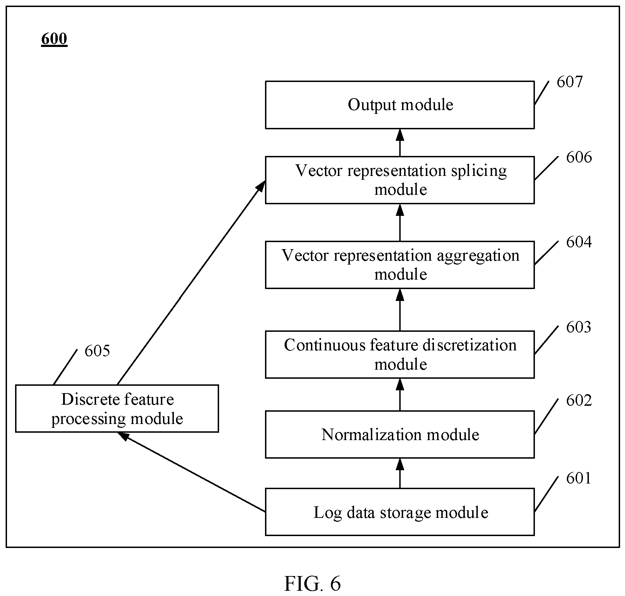

In a feature processing process, the log data storage module 501 further includes the discrete feature. Therefore, the data processing apparatus 500 further needs to process the discrete feature. In addition, the continuous feature in log data may also be first normalized. Therefore, in an example solution, a data processing apparatus 600 combined with machine learning or deep learning may be shown in FIG. 6, and includes: a log data storage module 601, a normalization module 602, a continuous feature discretization module 603, a vector representation aggregation module 604, a discrete feature processing module 605, a vector representation splicing module 606, and an output module 607. The log data storage module 601 is configured to collect and store behavior data fed back by a front-end user. The normalization module 602 is configured to normalize a continuous feature in the behavior data, and then input a normalized continuous feature to the continuous feature discretization module 603. The continuous feature discretization module 603 outputs N discretization probabilities for the continuous feature by using linear mapping and softmax, a multiclass neural network, or an attention network. The vector representation aggregation module 604 is configured to determine, based on the N discretization probabilities and N preset meta-embeddings, a vector representation value corresponding to the continuous feature. The discrete feature processing module 605 is configured to perform sparse coding on a discrete feature in the behavior data by using one-hot, and then extract a corresponding embedding vector representation value from an embedding table based on an ID of sparse coding. Finally, the vector representation splicing module 606 sequentially splices the vector representation value of the discrete feature and the vector representation value of the continuous feature as input data of the machine learning model or the deep learning model. Finally, the output module 607 outputs the input data to the machine learning model or the deep learning model.

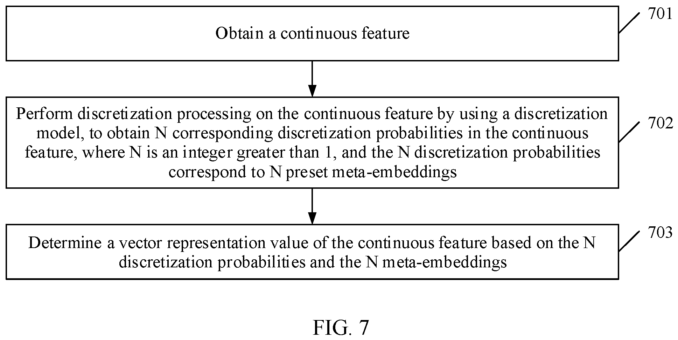

An embodiment of this application provides a continuous feature processing method. For details, refer to FIG. 7. Specific steps of the continuous feature processing method are as follows.

701: Obtain a continuous feature.

In a model training process or a model application process, behavior data of a front-end user is stored as sample data in the model training process or the model application process. The sample data includes a continuous feature and/or a discrete feature. This embodiment mainly describes the continuous feature processing method. The data processing apparatus obtains the continuous feature from the sample data.

Optionally, the continuous feature may be a continuous feature normalized by the data processing apparatus. In an example solution, the continuous feature can be normalized according to a formula

$$\overline{X} = (x - \min)/(\max - \min).$$

702: Perform discretization processing on the continuous feature by using a discretization model, to obtain N corresponding discretization probabilities in the continuous feature, where N is an integer greater than 1, and the N discretization probabilities correspond to N preset meta-embeddings.

After obtaining the continuous feature, the data processing apparatus inputs the continuous feature into the discretization model, and performs discretization processing on the continuous feature to obtain the N corresponding discretization probabilities in the continuous feature.

In this embodiment, a specific manner in which the data processing apparatus performs discretization processing on the continuous feature by using the discretization model, to obtain the N discretization probabilities corresponding to the continuous feature may be as follows: The data processing apparatus presets an initial variable in the discretization model, determines, based on the initial variable, N mapping values corresponding to the continuous feature, and finally calculates the N discretization probabilities of the continuous feature based on the mapping value. In this embodiment, the initial variable may be an initial mapping field. For the continuous feature, the N mapping values corresponding to the continuous feature may be calculated based on the initial variable. Then, one corresponding probability is calculated based on each of the N mapping values, to obtain N probabilities. In this case, the N probabilities are used as the N discretization probabilities corresponding to the continuous feature.

Optionally, N is greater than or equal to 20 and less than or equal to 100. Within this range, the discretization model may have good application effect.

In the recommendation system provided in this embodiment of this application, the discretization model may be a multiclass neural network, an attention network, or linear mapping and softmax.

In an example solution, linear mapping and softmax are used as an example for description.

A quantity of buckets into which the continuous feature is discretized is preset to h (in other words, it is equivalent to that a quantity of distribution areas into which the continuous feature is discretized is preset to h, and it may be understood that h is equal to N), where temperature is $\tau$, and an initialized linear mapping variable is $W_{logit} = R^{1 \times h}$.

Then, in a first step, linear mapping is performed on the continuous feature according to a linear mapping formula to obtain the N mapping values, where the linear mapping formula is $cont_{logit} = cont \cdot W_{logit}$.

In a second step, the N discretization probabilities corresponding to the continuous feature are calculated according to a discretization formula and based on the N mapping values, where the discretization formula is

$$cont\_p_k = e^{\frac{1}{\tau}cont^k_{logit}} / \sum_{i=1}^{h} e^{\frac{1}{\tau}cont^i_{logit}} \cdot W_{logit}$$

indicates a linear mapping variable, $R$ indicates a real number field, $h$ indicates the quantity of buckets into which the continuous feature is discretized, $cont_{logit}$ indicates a representation obtained after linear mapping of the continuous feature, $cont\_p_k$ indicates a probability that the continuous feature is discretized to a $k^{th}$ bucket, $cont^k_{logit}$ indicates a $k^{th}$ neuron output after linear mapping of the continuous feature, $\tau$ indicates a temperature control coefficient of softmax, and $cont^i_{logit}$ indicates an $i^{th}$ neuron output after linear mapping of the continuous feature.

After the first step and the second step, the data processing apparatus obtains probability distribution $cont\_p$ with a size of $1\times h$, which indicates a probability that the continuous feature is discretized to different buckets. In an example solution, age is used as an example. It is assumed that an age value is 20, and four buckets h1, h2, h3, and h4 are allocated to this age field. The foregoing steps are performed to obtain $1\times 4$ probability distribution: 0.1, 0.15, 0.7, and 0.05. That is, the probability distribution of the age value 20 in the four buckets is (0.1, 0.15, 0.7, and 0.05). In addition, it can be learned from the foregoing result that a probability that the age value 20 is distributed in a third bucket is highest.

In another example solution, the multiclass neural network is used as an example for description.

A quantity of buckets into which the continuous feature is discretized is preset to h (in other words, it is equivalent to that a quantity of distribution areas into which the continuous feature is discretized is preset to h). Then, in a first step, all feature values $cont$ in the continuous feature are input into a multilayer perceptron MLP. A formula of an $l^{th}$ layer of the MLP is $O^l = \sigma(O^{l-1}\square W^l + b^l)$, where $\sigma$ is an activation function, and may be a sigmoid function or a tanh function. $W^l$ is a weight parameter of the $l^{th}$ layer, $b^l$ is a deviation parameter of the $l^{th}$ layer, $O^{l-1}$ is an output of a previous layer, and $O^0 = cont$, to be specific, an original feature value is an input of a first layer.

In a second step, an activation function at a last layer of the MLP is set to softmax, a formula is $cont_p = O^L = softmax(O^{L-1}\square W^L + b^L)$, and a formula of softmax is $S_k = e^k / \sum_{i=1}^{h} e^j$, where $cont_p$ indicates a probability that the continuous feature is discretized to each bucket.

703: Determine a vector representation value of the continuous feature based on the N discretization probabilities and the N meta-embeddings.

The data processing apparatus initializes N vector representation values (also referred to as Meta Embedding) for each continuous feature field in the continuous feature, that is, $V = R^{h\times e}$, where $e$ represents a description dimension (also referred to as Embedding size) of the vector representation value. The vector representation value represents all feature values of one continuous feature field. Then, the data processing apparatus aggregates, based on the discretization probability obtained in the step 702, the meta-embeddings by using an aggregate function, to obtain the corresponding vector representation value (also referred to as an embedding $vx\_cont$) in the continuous feature. The aggregate function is used to aggregate the N corresponding meta-embeddings in the continuous feature field into one embedding corresponding to the feature value.

In an example solution, a vector representation in the meta-embedding corresponding to the continuous feature field one-to-one corresponds to a discretization probability of the feature value. It is assumed that the discretization probabilities are (a1, a2, a3, a4), and the vector representation values are (b1, b2, b3, b4). In this case, a1 corresponds to b1, a2 corresponds to b2, a3 corresponds to b3, and a4 corresponds to b4. The aggregate function is used to aggregate the meta-embeddings (b1, b2, b3, b4) corresponding to the feature value into one embedding. In an example solution, (b1, b2, b3, b4) may be aggregated to obtain b3 as the vector representation value corresponding to the feature value.

Optionally, there may be a plurality of aggregate functions. Details may be as follows:

In a possible implementation, the aggregate function is Max-Pooling. A largest value is determined from the discretization probabilities obtained in the step 702, and then an embedding corresponding to the largest value is obtained from the meta-embeddings as the vector representation value corresponding to the feature value. A calculation formula of the vector representation value is $vx\_cont = E^k$, where $k = \arg\max_h \{cont\_p_h\}$. For example, it is assumed that the discretization probabilities are (a1, a2, a3, a4), and the meta-embeddings are (b1, b2, b3, b4). In this case, a1 corresponds to b1, a2 corresponds to b2, a3 corresponds to b3, and a4 corresponds to b4. If a value of a3 is largest, b3 is used as the vector representation value of the feature value.

In another possible implementation, the aggregate function is Top-K-Sum. k largest probabilities are selected from the discretization probabilities obtained in the step 702, then embeddings corresponding to the probabilities are obtained from the meta-embeddings, and the embeddings are summed up to be used as the vector representation value corresponding to the feature value. A calculation formula of the vector representation value is

$$vx\_cont = \sum_{k=1}^{K} E^k$$

, where $k$ = arg $topk_h \{cont\_p_h\}$ . For example, it is assumed that the discretization probabilities are (a1, a2, a3, a4), and the meta-embeddings are (b1, b2, b3, b4). In this case, a1 corresponds to b1, a2 corresponds to b2, a3 corresponds to b3, and a4 corresponds to b4. If a value of k is 2, and values of a2 and a3 are respectively first two digits, the vector representation value of the feature value is b2+b3.

In another possible implementation, the aggregate function is Weighted-Average. The discretization probabilities are obtained in the step 702, and then, weighted summation is performed on the N probabilities and the meta-embeddings to obtain a weighted sum as the vector representation value corresponding to the feature value. A calculation formula of the vector representation value is

$$vx\_cont = \sum_{k=1}^{h} cont\_p_k \times E^k$$

. For example, it is assumed that the discretization probabilities are (a1, a2, a3, a4), and the meta-embeddings are (b1, b2, b3, b4). In this case, a1 corresponds to b1, a2 corresponds to b2, a3 corresponds to b3, and a4 corresponds to b4. The vector representation value of the feature value is equal to (a1×b1+a2×b2+a3×b3+a4×b4).

In an example solution, age is used as an example. It is assumed that an age value is 20, and four buckets h1, h2, h3, and h4 are allocated to this age field. The foregoing steps are performed to obtain 1×4 probability distribution: 0.1, 0.15, 0.7, and 0.05. That is, it can be learned from the probability distribution of the age value 20 in the four buckets that a probability that the age value 20 is distributed in a third bucket is highest. If the data processing apparatus selects the aggregate function Max-Pooling for calculation, the data processing apparatus selects a bucket whose probability is 0.7, and uses an embedding corresponding to the bucket as the vector representation value of the feature value.

In this embodiment, the data processing apparatus calculates a discretization probability, that has more than one dimension, for a feature value of each continuous feature by using the discretization model, presets a meta-embedding meta-embedding, that has more than one dimension, for each continuous feature field in the continuous feature, determines, for a feature value, a vector representation value from the meta-embedding by using an aggregate function and the discretization probability. In this way, for the continuous feature, compared with the conventional technology, in this embodiment, the vector representation value obtained through learning has a better representation capability, thereby helping improve accuracy of a prediction result.

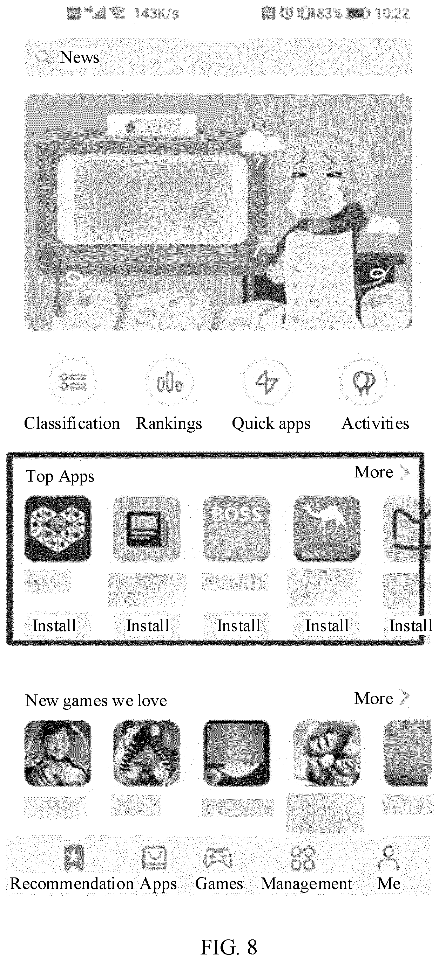

In this embodiment, the data processing method shown in FIG. 7 may be applied to a plurality of application scenarios, for example, a recommendation model or a search model. The following describes an application scenario of the data processing method provided in this embodiment of this application by using a click-through rate prediction scenario in a mobile phone application market recommendation system shown in FIG. 8 as an example. In the application scenario shown in FIG. 8, a specific data model of the application scenario is a click-through rate prediction model (or a recommendation model), and the click-through rate prediction model is mainly used in a "Top apps" column shown in FIG. 8 to recommend, based on a user feature (for example, a user age or a user gender) and an object feature (an application), corresponding applications (as shown in FIG. 8, applications such as "App 1" and "App 2" displayed in top applications) to the user. A specific processing procedure of the data model may be as follows: obtaining the user feature and the object feature, and then processing a discrete feature in the user feature and the object feature by using conventional processing. That is, one-hot encoding is first performed, and then an embedding representation is obtained through an embedding lookup operation. A continuous feature in the user feature and the object feature is processed by using the method shown in FIG. 7 to obtain a corresponding vector representation value, and then a vector representation value of the discrete feature and the vector representatio n value of the continuous feature in the user feature and the object feature are input to the recommendation model corresponding to the application scenario shown in FIG. 8 as input feature representations of the model, to obtain a recommendation result.

In this embodiment, the recommendation model may further calculate, based on a prediction result and an actual result, a loss value (loss) by using a loss function, and complete parameter update of the recommendation model and the discretization model based on the loss. During an online service, the data processing apparatus may be used as a part of the recommendation model, to complete discretization of the continuous feature online and learn an embedding of each continuous feature. Compared with technologies, such as an artificial feature engineering technology and a bucket discretization preprocessing technology, in this embodiment, processing time can be saved. When incremental training is used, a weight parameter of the discretization model may be adjusted with latest data distribution, so that data utilization efficiency is higher.

The continuous feature processing method provided in this application may be described below by using specific experimental data. This embodiment provides three datasets: a Criteo dataset, an AutoML dataset, and a Huawei industrial dataset. In an example solution, statistical information of each dataset is shown in Table 1.

**Table 1**

| Dataset name | Dataset size | Quantity of all features | Quantity of discrete features | Quantity of continuous features |
|---|---|---|---|---|
| Criteo | 45.8 M | 39 | 26 | 13 |
| AutoMI, | 4.69 M | 74 | 51 | 23 |
| Huawei industry | 8.75 M | 85 | 44 | 41 |

M is equal to 10 raised to the power of 6.

In this embodiment, an experiment evaluation indication is an AUC (that is, area under curve), and continuous feature processing technologies are a normalization method, an isometric discretization method, a logarithm method, DeepGBM, and the continuous feature processing technology provided in this embodiment of this application. Experiments are performed on the foregoing three datasets. For example, DeepFM is used as a top-level depth model. Experimental results are shown in Table 2.

**Table 2**

| | Criteo | AutoMI, | Industrial |
|---|---|---|---|
| DeepFM-Norm | 0.8107 | 0.7523 | 0.7248 |
| DeepFM-EDD | 0.8125 | 0.7545 | 0.7251 |
| DeepFM-LD | 0.8138 | 0.7527 | 0.7265 |
| DeepFM-TD | 0.8130 | 0.7531 | 0.7262 |
| DeepFM-AutoDis | 0.8149 | 0.7556 | 0.7277 |
| % Impr. | 0.14% | 0.15% | 0.17% |

AutoDis indicates a framework or an apparatus for performing the data processing method in embodiments of this application. It can be learned from the foregoing results that the technical solution provided in this embodiment can achieve a better result.

In addition, the technical solution provided in this embodiment may be applied to different models, and also has improvement effect. In this embodiment, several common depth models in the industry are selected for click-through rate (click-through-rate, CTR) prediction, including a feedforward neural network (factorisation-machine supported neural networks, FNN), Wide&Deep (that is, a joint training model of a wide model with logistic regression having a sparse feature and transformation and a deep model of a feedforward neural network having an embedding layer and a plurality of hidden layers), DeepFM, a DCN, an IPNN, and the like. Experimental results are shown in Table 3.

**Table 3**

| | Criteo | | AutoML | | Industrial | |
|---|---|---|---|---|---|---|
| | Basic model | +AutoDis | Basic model | +AutoDis | Basic model | +AutoDis |
| FNN | 0.8059 | 0.8091 | 0.7383 | 0.7448 | 0.7271 | 0.7286 |
| Wide&Deep | 0.8097 | 0.8121 | 0.7407 | 0.7442 | 0.7275 | 0.7287 |
| DeepFM | 0.8108 | 0.8149 | 0.7525 | 0.7556 | 0.7262 | 0.7277 |
| DCN | 0.8091 | 0.8128 | 0.7489 | 0.7508 | 0.7262 | 0.7281 |
| IPNN | 0.8101 | 0.8135 | 0.7519 | 0.7541 | 0.7269 | 0.7283 |

It can be learned from the foregoing results shown in Table 3 that the continuous feature processing method provided in this embodiment is added to these common depth models. This can significantly improve model performance, and show that the continuous feature processing method has good compatibility.

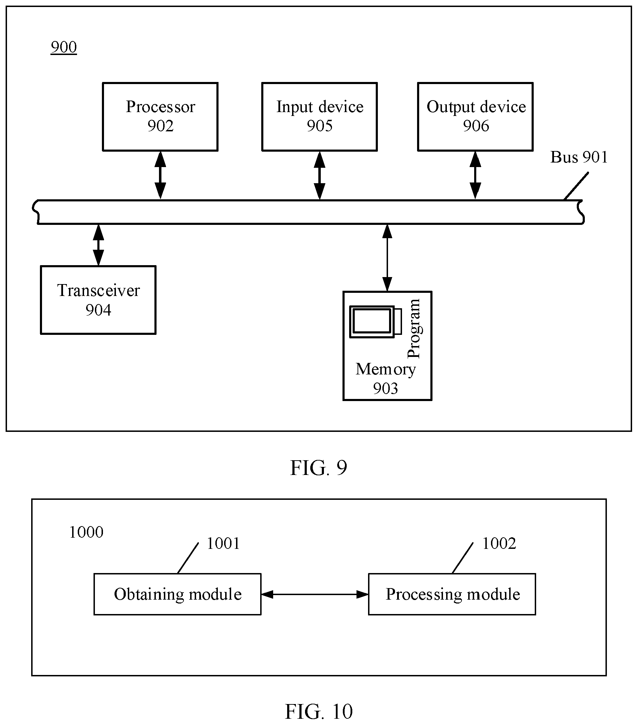

FIG. 9 is a possible schematic diagram of a structure of a data processing apparatus 900 in the foregoing embodiment. The data processing apparatus 900 may be configured as the foregoing data processing apparatus. The data processing apparatus 900 may include a processor 902, a computer-readable storage medium/memory 903, a transceiver 904, an input device 905, an output device 906, and a bus 901. The processor, the transceiver, the computer-readable storage medium, and the like are connected by using the bus. A specific connection medium between the foregoing components is not limited in this embodiment of this application.

In an example, the transceiver 904 obtains a continuous feature.

The processor 902 performs discretization processing on the continuous feature by using a discretization model, to obtain N discretization probabilities corresponding to the continuous feature, where N is an integer greater than 1, and the N discretization probabilities correspond to N preset meta-embeddings; and determines a vector representation value of the continuous feature based on the N discretization probabilities and the N meta-embeddings.

In still another example, the processor 902 may run an operating system to control functions between devices and components. The transceiver 904 may include a baseband circuit and a radio frequency circuit. For example, the vector representation value may be processed by using the baseband circuit and the radio frequency circuit, and then sent to a recommendation system or a search system.

The transceiver 904 and the processor 902 may implement a corresponding step in any one of the embodiments in FIG. 7 to FIG. 8. Details are not described herein again.

It may be understood that FIG. 9 shows only a simplified design of the data processing apparatus. In an actual application, the data processing apparatus may include any quantity of transceivers, processors, memories, and the like, and all data processing apparatuses that can implement this application fall within the protection scope of this application.

The processor 902 in the foregoing apparatus 900 may be a general-purpose processor, for example, a CPU, a network processor (network processor, NP), or a microprocessor, or may be an ASIC, or one or more integrated circuits configured to control program execution in the solutions of this application. Alternatively, the processor 902 may be a digital signal processor (digital signal processor, DSP), a field-programmable gate array (field-programmable gate array, FPGA), or another programmable logic device, a discrete gate or a transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations based on program instructions stored in the memory.

The bus 901 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, or the like. For ease of representation, only one thick line is used to represent the bus in FIG. 8, but this does not mean that there is only one bus or only one type of bus.

The computer-readable storage medium/memory 903 may further store an operating system and another application. Specifically, the program may include program code, and the program code includes computer operation instructions. More specifically, the memory may be a ROM, another type of static storage device that can store static information and instructions, a RAM, another type of dynamic storage device that can store information and instructions, a magnetic disk memory, or the like. The memory 903 may be a combination of the foregoing memories. In addition, the computer-readable storage medium/memory may be located in the processor, or may be located outside the processor, or distributed in a plurality of entities including a processor or a processing circuit. The computer-readable storage medium/memory may be specifically embodied in a computer program product. For example, the computer program product may include a computer-readable medium in a packaging material.

Alternatively, this embodiment of this application provides a universal processing system. For example, the universal processing system is usually referred to as a chip. The universal processing system includes one or more microprocessors that provide a processor function and an external memory that provides at least a part of a storage medium. All these components are connected to other supporting circuits by using an external bus architecture. When instructions stored in the memory are executed by the processor, the processor is enabled to perform some or all of the steps of the data retransmission method performed by a data processing apparatus in the embodiments shown in FIG. 7 and FIG. 8, and/or another process of the technology described in this application.

Method or algorithm steps described in combination with the content disclosed in this application may be implemented by hardware, or may be implemented by a processor by executing software instructions. The software instructions may include a corresponding software module. The software module may be located in a RAM memory, a flash memory, a ROM memory, an EPROM memory, an EEPROM memory, a register, a hard disk, a removable magnetic disk, a CD-ROM, or a storage medium in any other form known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be disposed in a terminal. Certainly, the processor and the storage medium may alternatively exist in the data processing apparatus as discrete components.

For details, refer to FIG. 10. An embodiment of this application is a possible schematic diagram of a structure of a data processing apparatus 1000 in the foregoing embodiment. The data processing apparatus 1000 includes an obtaining module 1001 and a processing module 1002. The obtaining module 1001 is connected to the processing module 1002 by using a bus. The data processing apparatus 1000 may be the data processing apparatus in the foregoing method embodiment, or may be configured as one or more chips in the data processing apparatus. The data processing apparatus 1000 may be configured to perform some or all functions of the data processing apparatus in the foregoing method embodiment. In addition, FIG. 10 shows only some modules of the data processing apparatus in this embodiment of this application.

The obtaining module 1001 is configured to obtain a continuous feature.

The processing module 1002 is configured to: perform discretization processing on the continuous feature by using a discretization model, to obtain N discretization probabilities corresponding to the continuous feature, where N is an integer greater than 1, and the N discretization probabilities correspond to N preset meta-embeddings; and determine a vector representation value of the continuous feature based on the N discretization probabilities and the N meta-embeddings. The processing module 1002 may further perform the method performed by the continuous feature discretization module 502 and the vector representation aggregation module 503 in FIG. 5. Alternatively, the processing module 1002 may further perform the method performed by the continuous feature discretization module 603 and the vector representation aggregation module 604 in FIG. 6.

Optionally, the data processing apparatus 1000 further includes a storage module. The storage module may store computer-executable instructions. In this case, the storage module is coupled to the processing module, so that the processing module can execute the computer-executable instructions stored in the storage module, to implement functions of the data processing apparatus in the foregoing method embodiment. In an example, the storage module optionally included in the data processing apparatus 1000 may be a storage unit in the chip, for example, a register or a cache. Alternatively, the storage unit may be a storage unit outside the chip, for example, a ROM, another type of static storage device that can store static information and instructions, or a RAM.

It should be understood that a procedure performed between the modules of the data processing apparatus in the embodiment corresponding to FIG. 10 is similar to a procedure performed by the data processing apparatus in the method embodiment corresponding to FIG. 7. Details are not described herein again.

It may be clearly understood by a person skilled in the art that, for ease and brevity of description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one location, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A data processing method, comprising:

   obtaining a continuous feature;
   performing discretization processing on the continuous feature by using a discretization model, to obtain N discretization probabilities corresponding to the continuous feature, wherein N is an integer greater than 1, and the N discretization probabilities correspond to N preset meta-embeddings; and
   determining a vector representation value of the continuous feature based on the N discretization probabilities and the N meta-embeddings.

2. The method according to claim 1, wherein the performing discretization processing on the continuous feature by using a discretization model, to obtain N discretization probabilities corresponding to the continuous feature comprises:

   presetting an initial variable in the discretization model;
   determining, based on the initial variable, N mapping values corresponding to the continuous feature; and
   calculating the N discretization probabilities of the continuous feature based on the mapping value.

3. The method according to claim 1 or 2, wherein the discretization model is a multiclass neural network, an attention network, or linear mapping and softmax.

4. The method according to claim 3, wherein when the discretization model is linear mapping and softmax, the presetting an initial variable in the discretization model comprises:

   presetting an initialized linear mapping variable to $W_{logit} = R^{1 \times h}$, wherein the initialized linear mapping variable is the initial variable;
   the determining, based on N, N mapping values corresponding to the continuous feature comprises:

   determining, according to a linear mapping formula, the N mapping values corresponding to the continuous feature, wherein
   the linear mapping formula is $cont_{logit} = cont \cdot W_{logit}$; and
   the calculating the N discretization probabilities of the continuous feature based on the mapping value comprises:

   calculating, according to a discretization formula, a probability corresponding to each of the N mapping values to obtain N probabilities, wherein the discretization formula is

   $$cont\_p_k = e^{\frac{1}{\tau}cont_{logit}^k} / \sum_{i=1}^{h} e^{\frac{1}{\tau}cont_{logit}^i}$$

   , and the N probabilities are used as the N discretization probabilities; and

   $W_{logit}$ indicates a linear mapping variable, $R$ indicates a real number field, $h$ indicates a quantity of buckets into which the continuous feature is discretized, $h$ is equal to N, $cont_{logit}$ indicates a representation obtained after linear mapping of the continuous feature, $cont\_p_k$ indicates a probability that the continuous feature is discretized to a $k^{th}$ bucket, $cont_{logit}^k$ indicates a $k^{th}$ neuron output after linear mapping of the continuous feature, $\tau$ indicates a temperature control coefficient of softmax, and $cont_{logit}^i$ indicates an $i^{th}$ neuron output after linear mapping of the continuous feature.

5. The method according to any one of claims 1 to 4, wherein the determining a vector representation value of the continuous feature based on the N discretization probabilities and the N meta-embeddings comprises:
   determining the vector representation value of the continuous feature by using an aggregate function and based on the N discretization probabilities and the N meta-embeddings, wherein the aggregate function is Max-Pooling, Top-K-Sum, or Weighted-Average.

6. The method according to any one of claims 1 to 5, wherein the method further comprises:

inputting a user feature and an object feature into a recommendation model or a search model to obtain a prediction result, wherein
the user feature or the object feature comprises the vector representation value; and
the user feature or the to-be-recommended object feature represents the continuous feature by using the vector representation value.

7. The method according to claim 6, wherein the method further comprises:

obtaining an actual result; and
adjusting a weight parameter of the discretization model based on the prediction result and the actual result by using a loss function.

8. The method according to any one of claims 1 to 7, wherein N is greater than or equal to 20 and less than or equal to 100.

9. The method according to any one of claims 1 to 8, wherein the continuous feature is feature data having a continuous statistical feature value in sample data.

10. The method according to claim 9, wherein the continuous feature comprises, but is not limited to, an age feature, a click count feature, and a score feature in a recommendation system.

11. The method according to any one of claims 1 to 10, wherein the continuous feature is a normalized continuous feature.

12. A data processing apparatus, comprising:

an obtaining module, configured to obtain a continuous feature; and
a processing module, configured to: perform discretization processing on the continuous feature by using a discretization model, to obtain N discretization probabilities corresponding to the continuous feature, wherein N is an integer greater than 1, and the N discretization probabilities correspond to N preset meta-embeddings; and determine a vector representation value of the continuous feature based on the N discretization probabilities and the N meta-embeddings.

13. The apparatus according to claim 12, wherein the processing module is specifically configured to: preset an initial variable in the discretization model, determine, based on the initial variable, N mapping values corresponding to the continuous feature, and calculate the N discretization probabilities of the continuous feature based on the mapping value.

14. The apparatus according to claim 12 or 13, wherein the discretization model is a multiclass neural network, an attention network, or linear mapping and softmax.

15. The apparatus according to claim 14, wherein when the discretization model is linear mapping and softmax, the processing module is specifically configured to: preset an initialized linear mapping variable to $W_{logit} = R^{1 \times h}$, wherein the initialized linear mapping variable is the initial variable;

determine, according to a linear mapping formula, the N mapping values corresponding to the continuous feature, wherein
the linear mapping formula is $cont_{logit} = cont \cdot W_{logit}$; and
calculate, according to a discretization formula, a probability corresponding to each of the N mapping values to obtain N probabilities, wherein the discretization formula is

$$cont\_p_k = e^{\frac{1}{\tau}cont_{logit}^k} / \sum_{i=1}^{h} e^{\frac{1}{\tau}cont_{logit}^i}$$

, and the N probabilities are used as the N discretization probabilities; and
$W_{logit}$ indicates a linear mapping variable, $R$ indicates a real number field, $h$ indicates a quantity of buckets into which the continuous feature is discretized, $h$ is equal to N, $cont_{logit}$ indicates a representation obtained after linear mapping of the continuous feature, $cont\_p_k$ indicates a probability that the continuous feature is discretized to a $k^{th}$ bucket, $cont^k_{logit}$ indicates a $k^{th}$ neuron output after linear mapping of the continuous feature, $\tau$ indicates a temperature control coefficient of softmax, and $cont^i_{logit}$ indicates an $i^{th}$ neuron output after linear mapping of the continuous feature.

16. The apparatus according to any one of claims 12 to 15, wherein the processing module is specifically configured to: determine, by using an aggregate function and based on the N discretization probabilities and the N meta-embeddings, the vector representation value corresponding to the continuous feature, wherein the aggregate function is Max-Pooling, Top-K-Sum, or Weighted-Average.

17. The apparatus according to any one of claims 12 to 16, wherein the processing module is further configured to input a user feature and an object feature into a recommendation model or a search model to obtain a prediction result, wherein the user feature or the object feature comprises the vector representation value; and the user feature or the to-be-recommended object feature represents the continuous feature by using the vector representation value.

18. The apparatus according to claim 17, wherein the obtaining module is further configured to obtain an actual result; and the processing module is further configured to adjust a weight parameter of the discretization model based on the prediction result and the actual result by using a loss function.

19. The apparatus according to any one of claims 12 to 18, wherein N is greater than or equal to 20 and less than or equal to 100.

20. The apparatus according to any one of claims 12 to 19, wherein the continuous feature is feature data having a continuous statistical feature value in sample data.

21. The apparatus according to claim 20, wherein the continuous feature comprises, but is not limited to, an age feature, a click count feature, and a score feature in a recommendation system.

22. The apparatus according to any one of claims 12 to 20, wherein the continuous feature is a normalized continuous feature.

23. A data processing apparatus, comprising at least one processor and a memory, wherein the processor is configured to be coupled to the memory, and the processor invokes instructions stored in the memory to control the data processing apparatus to perform the method according to any one of claims 1 to 11.

24. A computer storage medium, wherein the computer-storage medium stores computer instructions, and the computer instructions are used to perform the method according to any one of claims 1 to 11.

25. A computer program product comprising instructions, wherein when the computer program product runs on a computer, the computer is enabled to perform the method according to any one of claims 1 to 11.

FIG. 1

Original data

Feature processing

Model input

Model training

Recommendation model

Online service

Recommendation list

FIG. 2

User data collection

Recommendation
list 1
Recommendation
list 2
...

Online prediction module

Prediction model

Log storage module

Offline training module

FIG. 3

Output layer

↑

MLP and feature interaction layer

↑

Vectorized representation layer

↑

Input layer

FIG. 4

**500**

Output module                                           505

↑

Vector representation splicing module                   504

↑

Vector representation aggregation module                503

↑

Continuous feature discretization module                502

↑

Log data storage module                                 501

FIG. 5

**600**

Output module 607

Vector representation splicing module 606

Vector representation aggregation module 604

Continuous feature discretization module 603

Normalization module 602

Log data storage module 601

Discrete feature processing module 605

FIG. 6

| | | |
|---|---|---|
| Obtain a continuous feature | | 701 |

| | | |
|---|---|---|
| Perform discretization processing on the continuous feature by using a discretization model, to obtain N corresponding discretization probabilities in the continuous feature, where N is an integer greater than 1, and the N discretization probabilities correspond to N preset meta-embeddings | | 702 |

| | | |
|---|---|---|
| Determine a vector representation value of the continuous feature based on the N discretization probabilities and the N meta-embeddings | | 703 |

FIG. 7

FIG. 8

900

| Processor 902 | Input device 905 | Output device 906 |

Bus 901

Transceiver 904

Memory 903

Program

FIG. 9

1000

1001

Obtaining module

1002

Processing module

FIG. 10

## INTERNATIONAL SEARCH REPORT

International application No.

**PCT/CN2021/133500**

### A. CLASSIFICATION OF SUBJECT MATTER

G06N 3/04(2006.01)i

According to International Patent Classification (IPC) or to both national classification and IPC

### B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

SIPOABS; DWPI; CNABS; CNTXT; IEEE; CNKI: 离散, 连续特征, 数据, 概率, 映射, 向量, discretiz+, continuous features, data, probability, map+, vector+

### C. DOCUMENTS CONSIDERED TO BE RELEVANT

| Category* | Citation of document, with indication, where appropriate, of the relevant passages | Relevant to claim No. |
|---|---|---|
| PX | CN 112529151 A (HUAWEI TECHNOLOGIES CO., LTD.) 19 March 2021 (2021-03-19) claims 1-25 | 1-25 |
| X | CN 108509627 A (TENCENT TECHNOLOGY SHENZHEN CO., LTD.) 07 September 2018 (2018-09-07) claims 1-15, description pages 8-15 | 1-3, 5-14, 16-25 |
| A | CN 102049420 A (LIU, Bin et al.) 11 May 2011 (2011-05-11) entire document | 1-25 |
| A | US 2020097813 A1 (INTERNATIONAL BUSINESS MACHINES CORPORATION) 26 March 2020 (2020-03-26) entire document | 1-25 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 December 2021** | **07 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/133500**

| Patent document cited in search report | | | Publication date (day/month/year) | Patent family member(s) | | | Publication date (day/month/year) |
|---|---|---|---|---|---|---|---|
| CN | 112529151 | A | 19 March 2021 | None | | | |
| CN | 108509627 | A | 07 September 2018 | None | | | |
| CN | 102049420 | A | 11 May 2011 | CN | 102049420 | B | 27 August 2014 |
| US | 2020097813 | A1 | 26 March 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011391497